# EUROPÄISCHE PATENTANMELDUNG

(11) **EP 1 101 657 A2**
(43) Veröffentlichungstag der Anmeldung: **23.05.2001**
(21) Anmeldenummer: 00122289.2
(22) Anmeldetag: 20.10.2000
(51) Int. Cl.: B60R 21/01

(54) **Verfahren und Vorrichtung zur Auslösung einer Sicherheitseinrichtung, insbesondere eines Kraftfahrzeugs**

(30) Priorität: 15.03.2000 DE 10012434; 11.11.1999 DE 19954219
(71) Anmelder: Volkswagen Aktiengesellschaft, 38436 Wolfsburg (DE)
(72) Erfinder: Hübler, Roland, 38448 Wolfsburg (DE); Meywerk, Martin, Dr., 38302 Wolfenbüttel (DE)

(57) **Zusammenfassung**

Die Erfindung betrifft ein Verfahren zur Auslösung einer Sicherheitseinrichtung, insbesondere eines Kraftfahrzeugs, bei dem ein von einem Crash-Sensor (2a-2e) erzeugtes Sensorsignal (S1-S5) zu einer Steuer-/Auswerteeinrichtung (2) geleitet und dort auf die darin enthaltene Crashinformation unter Zuhilfenahme einer Frequenzanalyse ausgewertet wird, und bei dem ein die Sicherheitseinrichtung (SE) initiierendes Steuersignal (ST) erzeugt wird, wenn durch die Steuer-/Auswerteeinrichtung (2) das Vorliegen eines Crashs erkannt wird.

Erfindungsgemäß ist vorgesehen, daß die Frequenzanalyse des Sensorsignals (S1-S5) mittels einer Wavelet-Transformation durchgeführt wird.

## Beschreibung

Die Erfindung betrifft ein Verfahren zur Auslösung einer Sicherheitseinrichtung, insbesondere eines Kraftfahrzeugs, bei dem ein von einem Crash-Sensor erzeugtes Sensorsignal zu einer Steuer-/Auswerteeinrichtung geleitet und dort auf die darin enthaltene Crashinformation unter Zuhilfenahme einer Frequenzanalyse ausgewertet wird, und bei dem ein die Sicherheitseinrichtung initiierendes Steuersignal erzeugt wird, wenn durch die Steuer-/Auswerteeinrichtung das Vorliegen eines Crashs erkannt wird, sowie eine derartige Vorrichtung.

Ein derartiges Verfahren ist aus der DE 44 45 996 bekannt. In dieser Druckschrift ist ein Verfahren zur Auslösung von Rückhaltemitteln, insbesondere in Kraftfahrzeugen, beschrieben, bei denen ein Beschleunigungssignal eines Crash-Sensors gemessen wird. Dieses Beschleunigungssignal wird durch eine zeitliche Integration in ein Geschwindigkeitssignal umgewandelt und das Geschwindigkeitssignal wird zur Bestimmung eines Auslösekriteriums mit einer Auslöseschwelle verglichen. Hierbei ist vorgesehen, daß die Integration des Beschleunigungssignals in Abhängigkeit einer Frequenzanalyse des Beschleunigungssignals beeinflußt wird, wobei die Frequenzanalyse mittels einer Fast-Fourier-Transformation und der dazu benötigten Teiloperationen durchgeführt wird, indem zu einem vorgebbaren Zeitschritt des Beschleunigungssignals die Fast-Fourier-Transformation mit einer festlegbaren Anzahl vorangegangener Zeitschritte mit den dort vorhandenen Beschleunigungssignalen durchgeführt wird. Das bekannte Verfahren verwendet also eine gefensterte Fourier-Transformation zur Erstellung einer zeitlich aufgelösten Frequenzanalyse des Beschleunigungssignals, indem für jeden Zeitschritt bei der Fourier-Analyse des Beschleunigungssignals die Frequenzwerte 1 bis n der vorangegangenen Zeitspektren berücksichtigt werden. Durch diese gefensterte Fourier-Transformation verschiebt sich die Berechnung mit jedem Zeitschritt, d. h., daß zusammen mit dem aktuellen Beschleunigungswert die vorangegangenen 31 Beschleunigungswerte transformiert werden. Diese gefensterte Fourier-Transformation wird fortlaufend durchgeführt und bei jedem neuen Zyklus, d. h., bei jedem neuen Zeitschritt, neu berechnet, so daß sich für jeden Zeitschritt ein Signalbild ergibt, bei dem der transformierte Beschleunigungswert in Abhängigkeit der Frequenz, der Zeit und der Ampitude dargestellt ist. Die derart ermittelte spektrale Beschleunigungsdichte kann nunmehr zur Auswertung herangezogen werden, wobei der Ampitudenverlauf der spektralen Beschleunigungsdichte bei unterschiedlichen Frequenzwerten eine unterschiedliche Höhe zeigt und bei einem bestimmten Frequenzwert einen Maximalwert erkennen läßt. Indem nun die Ampituden differenziert werden, wobei eine Differenzierung zur bestimmten, für Crashs typischen Frequenzwerten erfolgt, kann aufgrund der bekannten Wahrscheinlichkeiten, bei welchen sich aus dem Beschleunigungssignal gewonnenen Frequenzen ein einfacher oder ein komplizierter Crash eintritt, soll nach den Angaben der vorgenannten Druckschrift durch die Differenzierung der Ampitudenwerte bei wählbaren Frequenzspektren eine sichere und zuverlässige Auslösung von Rückhaltesysteme eingestellt werden.

Die vorgenannte Analyse der Sensorsignale wird deshalb durchgeführt, um Signale, die durch einen Crash verursacht werden, und bei denen die Sicherheitseinrichtungen des Kraftfahrzeugs ausgelöst werden sollen, also den sogenannten Crash-Signalen, von den sogenannten Misuse-Signalen, also von Signalen, die nicht durch einen Crash verursacht werden und bei deren Auftreten naturgemäß nicht die Sicherheitseinrichtungen des Kraftfahrzeugs aktiviert werden sollen, oder von Signalen, bei denen zwar eine Kollision des Kraftfahrzeugs mit einem Hindernis stattfindet, aber aufgrund der geringen Unfallschwere keine Verletzungsgefahr für die Fahrzeuginsassen besteht und demgemäß keine Auslösung einer Sicherheitseinrichtung erfolgen soll, zu unterscheiden. Es sollen z. B. bestimmte Rückhalteeinrichtungen für die Fahrzeuginsassen, z. B. Seitenairbags, z. B. nicht auslösen, wenn ein Radfahrer in die Tür des Fahrzeugs fährt, oder wenn ein Stein von unten gegen die Fahrzeugtür geschleudert wird.

Das bekannte Verfahren besitzt nun den Nachteil, daß es die Fourier-Analyse grundsätzlich nur erlaubt, die auftretenden Sensorsignale hinsichtlich der darin enthaltenen Frequenzspektren und der Ampituden der dazugehörigen Wellen zu analysieren; sie läßt jedoch grundsätzlich keine Aussagen über das zeitliche Auftreten einzelner Frequenzen oder Frequenzbereiche zu. Um nun zu versuchen, dies zu erreichen, wird bei dem bekannten Verfahren in die Fourier-Transformation eine festlegbare Anzahl vorangegangener Zeitabschnitte in diesen Analyseprozeß miteinbezogen, so daß jeweils ein bestimmtes Zeitfenster berücksichtigt wird. Eine derartige Frequenzanalyse, bei der die Fenstergröße willkürlich durch die Anzahl der vorangegangenen Teilabschnitte, die in den Analyseprozeß miteingehen, festgelegt wird, ist jedoch äußerst kritisch bezüglich der Wahl dieses Zeitfensters: Wird das Zeitfenster zu groß gewählt, so tritt eine Verschmierung des Informationsgehalts auf, wird es zu klein gewählt, ergibt die Analyse nur bestimmte Frequenzkomponenten, die dann kein Rückschluß mehr auf das Gesamtsignal erlauben, so daß es bei dem bekannten Verfahren durchaus der Fall sein kann, daß aufgrund einer nicht-angepaßten Wahl der Fenstergröße ein einen Crash repräsentierendes Sensorsignal als irrelevant für die Auslösung der Sicherheitseinrichtung aufgefaßt oder ein Misuse-Signal dazu führt, daß die Sicherheitseinrichtungen ausgelöst werden. Diese starre Fensterung läßt also eine signaladaptive, d. h., eine signalangepaßte Auflösung des Sensorsignals nicht zu.

Es ist daher Aufgabe der vorliegenden Erfindung, ein Verfahren und eine Vorrichtung der eingangs genannten Art derart weiterzubilden, daß eine bessere Adaption der Frequenzanalyse an den Signalverlauf gegeben ist.

Diese Aufgabe wird durch das erfindungsgemäße Verfahren dadurch gelöst, daß die Frequenzanalyse des Sensorsignals mittels einer Wavelet-Transformation durchgeführt wird.

Die erfindungsgemäßen Maßnahmen besitzen den Vorteil, daß das Sensorsignal des Crash-Sensors zu jedem Zeitpunkt in seine Frequenzbestandteile zerlegt dargestellt werden kann. Die Wavelet-Transformierte des Sensorsignals ist also in vorteilhafter Art und Weise eine Funktion der Zeit und der Frequenz, so daß das Sensorsignal mit Hilfe des erfindungsgemäßen Verfahrens in vorteilhafter Art und Weise besonders einfach in seine Frequenzbestandteile zerlegt darstellen läßt, wobei zu jedem Zeitpunkt die einzelnen Frequenzkomponenten ermittelbar sind. Ein weiterer, besonders wichtiger Vorteil des erfindungsgemäßen Verfahrens besteht darin, daß die Wavelet-Transformation in vorteilhafter Art und Weise bewirkt, daß die Frequenzanalyse des Sensorsignals unabhängig von der Wahl eines Zeitfensters ist.

Eine vorteilhafte Weiterbildung der Erfindung sieht vor, daß die Wavelet-Transformierte des Sensorsignals mit charakteristischen Unfallspektren, die in der Auswerteeinrichtung gespeichert sind, verglichen wird und bei einer innerhalb vorgegebener Grenzen liegenden Übereinstimmung der Wavelet-Transformierten mit dem gespeicherten Signalmuster die Auslösung der entsprechenden Sicherheitseinrichtung durchgeführt wird. Eine derartige Maßnahme besitzt den Vorteil, daß hierdurch besonders einfach empirisch gewonnene Signalmuster in den Auslöseprozeß der Sicherheitseinrichtungen miteinbeziehbar sind.

Weitere vorteilhafte Weiterbildungen sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine schematische Darstellung einer Vorrichtung zur Durchführung des Verfahrens, und
- Figur 2: eine Darstellung einer Wavelet-Transformierten eines Sensorsignals.

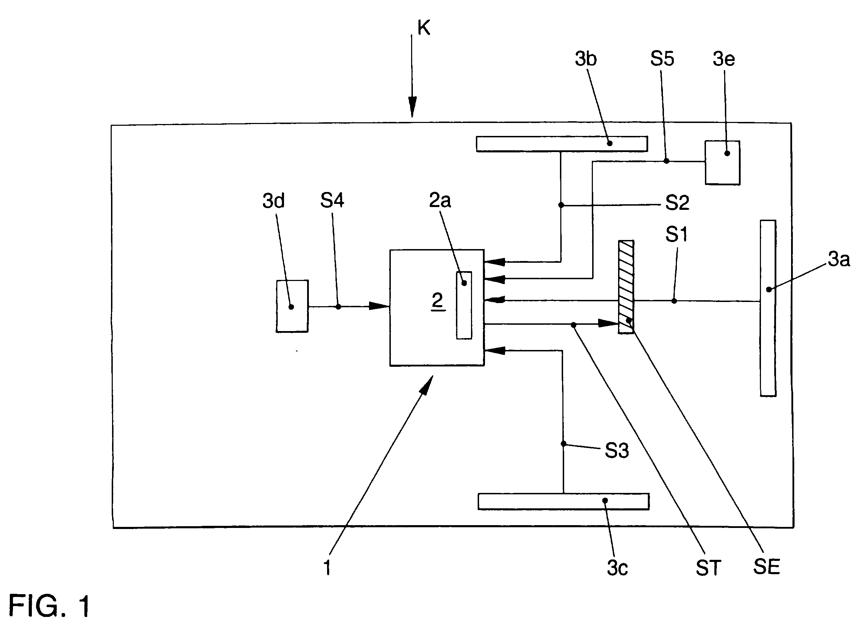

In Figur 1 ist nun eine allgemein mit 1 bezeichnete Vorrichtung zur Durchführung eines Verfahrens zur Auslösung mindestens einer Sicherheitseinrichtung SE eines Kraftfahrzeugs K dargestellt. Die Vorrichtung 1 weist eine Steuer-/Auswerteeinrichtung 2 auf, der die Sensorsignale eine Anzahl von Crash-Sensoren 3a-3e zugeführt sind. Im beschriebenen Fall ist der Crash-Sensor 3a als ein Deformationssensor ausgebildet, durch den eine Deformation des Frontbereichs des Kraftfahrzeugs K erfaßbar und ein diese Information repräsentierendes Sensorsignal S1 zur Steuer-/Auswerteeinrichtung 2 leitbar ist. Die beiden Crash-Sensoren 3b, 3c sind als Seitenaufprall-Sensoren ausgebildet, die eine Deformation des Seitenbereichs des Kraftfahrzeugs K, die bei einem Seitenaufprall auftritt, erfassen und entsprechende Sensorsignale S2, S3 zur Steuer/Auswerteeinrichtung 2 leiten. Der Crash-Sensor 3d ist als Beschleunigungssensor ausgebildet, der die bei einem Unfall auftretende Beschleunigung mißt und ein entsprechendes, diese Information repräsentierendes Signal S4 erzeugt. Der Sensor 3e ist als ein Pre-Crash-Sensor ausgebildet, durch den die Umgebung des Kraftfahrzeugs K überwachbar und bei einer definierte Kriterien überschreitenden Annäherung eines Objekts an das Kraftfahrzeug K ein Sensorsignal S5 erzeugbar ist, das dann zur Steuer/Auswerteeinrichtung 2 geleitet wird.

Es ist dem Fachmann klar ersichtlich, daß die vorgenannte, beispielhafte Auflistung der als Crash-Sensor 3a-3e einsetzbaren Sensoren nur exemplarischen Charakter besitzen und keinesfalls als abschließend zu betrachten ist. Vielmehr ist es möglich, das beschriebene Verfahren für jeden Sensor einzusetzen, durch den sicherheitsrelevante Informationen erfaßbar und ein diese Informationen repräsentierendes Sensorsignal erzeugbar ist.

Das Verfahren wird im folgenden anhand des Crash-Sensors 3a beschrieben, da die Vorgangsweise bei den von den weiteren Crash-Sensoren 3b-3e gelieferten Sensorsignalen S2-S5 in entsprechender Weise erfolgt: Die Steuer-/Auswerteeinrichtung 2, der das Sensorsignal S1 des Crash-Sensors 3a zugeführt wird, bereitet dieses nun in an und für sich bekannter und daher nicht mehr näher beschriebenen Art und Weise für den nachfolgenden Signalverarbeitungsvorgang auf, wobei es für bestimmte Einsatzzwecke durchaus möglich ist, daß das Sensorsignal S1 unmittelbar einer Frequenzanalyseeinheit 2a der Steuer-/Auswerteeinrichtung 2 zugeführt wird. Die Frequenzanalyseeinheit 2a führt nun eine Wavelet-Transformation des ihr zugeführten Sensorsignals S1 durch. Derartige Frequenzanalyseeinheiten 2a zur Durchführung einer Wavelet-Transformation sind bekannt, so daß die genaue Funktionsweise einer derartigen Frequenzanalyseeinheit 2a hier nicht mehr beschrieben werden muß. Es wird in diesem Zusammenhang auf den Artikel "An Introduction to Wavelets" von Amara Graps, erschienen in IEEE Computational Science and Engineering, Sommer 1995, vol. 2, num. 2, verwiesen, dessen Inhalt hiermit offenbart ist. Die Wavelet-Transformierte des Sensorsignals S1 ist nun eine Funktion der Zeit t und der Frequenz f, d. h., die Wavelet-Transformierte des Sensorsignals S1 ist eine gewichtete Superposition von zeitlich aufgelösten Frequenzspektren, so daß es die Wavelet-Transformierte des Sensorsignals S1 in vorteilhafter Art und Weise erlaubt, nicht nur die Frequenzanteile des Sensorsignals S1 und deren Ampituden, sondern auch den zeitlichen Verlauf dieser Frequenzanteile zu ermitteln.

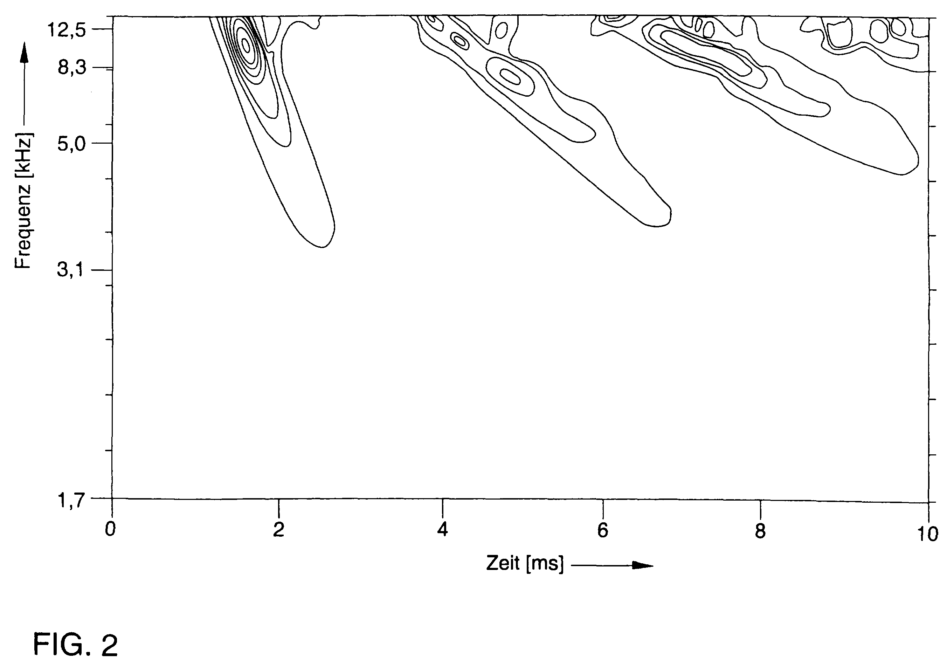

In Figur 2 ist nun die Wavelet-Transformierte eines typischen Sensorsignals dargestellt. Auf der Abszisse dieses Diagramms ist die Zeit in Millisekunden und auf der Ordinate die Frequenz in Kilohertz dargestellt. Man erkennt auf diesem Isoplot-Diagramm, daß das Sensorsignal vier Maxima aufweist, die ungefähr bei 2, 5,5, 8 und 9,5 ms liegen. Die Amplituden der einzelnen Frequenzkomponenten der Maxima sind durch die Iso-Linien ?? gegeben. Die Figur 2 zeigt somit deutlich, daß es das beschriebene Verfahren in vorteilhafter Art und Weise erlaubt, einfach und von der Wahl eines Zeitfensters unabhängig ein Sensorsignal zeitlich aufgelöst in seine Frequenzspektren zu zerlegen, wobei für jede einzelne Frequenzkomponente ihre Amplitude und ihr zeitliches Auftreten ermittelbar ist.

Die Wavelet-Transformierte wird nun von der Steuer-/Auswerteeinrichtung 2 mit in ihre gespeicherten, typische Crash-Szenarien repräsentierenden Crash-Mustern verglichen, wobei bevorzugt wird, daß diese Crash-Muster in Versuchen dadurch ermittelt werden, daß die Sensorsignale S1-S5 bei einem Crash-Test oder einem im Labor simulierten Crash des Kraftfahrzeugs K ermittelt und ebenfalls durch das vorstehend beschriebene Verfahren aufbereitet wurden, so daß durch die Steuer-/Auswerteeinrichtung 2 die Wavelet-Transformierte der aktuell auftretenden Sensorsignale S1-S5 mit Wavelet-Transformierten von Sensorsignalen, die bei einem unter definierten Bedingungen stattfindenden Crash aufgezeichnet wurden, verglichen wird. Eine derartige Vorgangsweise erlaubt in vorteilhafter Art und Weise eine besonders einfache Klassifikation des Unfallgeschehens und daher eine entsprechende situationsangepaßte Aktivierung der Sicherheitseinrichtungen.

Wird nun eine innerhalb definierter Grenzen liegende Übereinstimmung zwischen dem Sensorsignal S1 bzw. seiner Wavelet-Transformierten und einem der gespeicherten Crash-Muster festgestellt, erzeugt die Steuer-/Auswerteeinheit 2 ein Steuersignal ST, welches die Auslösung der Sicherheitseinrichtung SE bewirkt.

## Patentansprüche

1. Verfahren zur Auslösung einer Sicherheitseinrichtung, insbesondere eines Kraftfahrzeugs, bei dem ein von einem Crash-Sensor (2a-2e) erzeugtes Sensorsignal (S1-S5) zu einer Steuer-/Auswerteeinrichtung (2) geleitet und dort auf die darin enthaltene Crashinformation unter Zuhilfenahme einer Frequenzanalyse ausgewertet wird, und bei dem ein die Sicherheitseinrichtung (SE) initiierendes Steuersignal (ST) erzeugt wird, wenn durch die Steuer/Auswerteeinrichtung (2) das Vorliegen eines Crashs erkannt wird, **dadurch gekennzeichnet**, daß die Frequenzanalyse des Sensorsignals (S1-S5) mittels einer Wavelet-Transformation durchgeführt wird.

2. Verfahren nach Anspruch 2, **dadurch gekennzeichnet,** daß das Sensorsignal (S1-S5) einer Frequenzanalyseeinheit (2a) zur Durchführung der Wavelet-Transformation zugeführt wird.

3. Verfahren nach einem der vorangehenden Ansprüche, **dadurch gekennzeichnet**, daß in der Steuer-/Auswerteeinrichtung (2) Crash-Muster gespeichert sind, und daß die Wavelet-Transformierte des Sensorsignals (S1-S5) mit den einzelnen Crash-Mustern verglichen wird, und daß bei einer innerhalb vorgegebener Grenzen liegenden Übereinstimmung zwischen dem Sensorsignal (S1-S5) bzw. einer Wavelet-Transformierten und einem der gespeicherten Crash-Muster durch die Steuer-/Auswerteeinrichtung (2) das die Sicherheitseinrichtung (SE) auslösende Steuersignal (ST) erzeugt wird.

4. Verfahren nach einem der vorangehenden Ansprüche, **dadurch gekennzeichnet**, daß die Crash-Muster derart generiert werden, indem unter definierten Bedingungen ein Crash durchgeführt oder in einem Labor simuliert wird und die dabei von den Crash-Sensoren (2a-2e) gelieferten Sensorsignale (S1-S5) einer Wavelet-Transformation unterworfen werden.

5. Verfahren nach einem der vorangehenden Ansprüche, **dadurch gekennzeichnet**, daß der Steuer-/Auswerteeinrichtung (2) ein Sensorsignal (S1, S2, S3) eines Deformationssensors (2a-2c) oder ein Sensorsignal (S4) eines Beschleunigungssensors oder ein Sensorsignal (S5) eines Pre-Crash-Sensors (3e) zugeführt wird.

6. Vorrichtung zur Auslösung einer Sicherheitseinrichtung, insbesondere eines Kraftfahrzeugs, die eine Steuer-/Auswerteeinrichtung (2) aufweist, der ein Sensorsignal (S1-S5) eines Crash-Sensors (2a-2e) zuführbar ist, und durch die ein Steuersignal (ST) für die Sicherheitseinrichtung (SE) erzeugbar ist, wenn durch die Steuer-/Auswerteeinrichtung (2) das Vorliegen eines Crashs erkannt wird, wobei die Steuer-/Auswerteeinrichtung (2) eine Frequenzanalyseeinheit (2a) aufweist, **dadurch gekennzeichnet**, daß durch die Frequenzanalyseeinheit (2a) eine Wavelet-Transformation des ihr zugeführten Sensorsignals (S1-S5) durchführbar ist.

7. Vorrichtung nach Anspruch 6, **dadurch gekennzeichnet**, daß der Vorrichtung das Sensorsignal (S1, S2, S3) eines Deformationssensors (3a, 3b, 3c), das Sensorsignal (S4) eines Beschleunigungssensors (3d) oder das Sensorsignal (S5) eines Pre-Crash-Sensors (3e) zuführbar ist.
